# EUROPEAN PATENT SPECIFICATION

(11) **EP 2 214 848 B1**
(45) Date of publication and mention of the grant of the patent: **27.08.2014**
(21) Application number: 08848663.4
(22) Date of filing: 17.11.2008
(51) Int. Cl.: B09C 1/02, C22B 11/08, C02F 1/28, C02F 101/18

(54) **REMOVAL OF CYANIDE FROM AQUEOUS STREAMS**
ENTFERNUNG VON CYANID AUS WÄSSRIGEN STRÖMEN
ELIMINATION DE CYANURE DE FLUX AQUEUX

(30) Priority: 15.11.2007 ZA 200709865
(43) Date of publication of application: 11.08.2010
(73) Proprietor: Maelgwyn Mineral Services Africa (Proprietary) Limited, 1709 Maraisburg (ZA)
(72) Inventor: SINGH, Adrian, 1501 Benoni (ZA)
(74) Representative: Spencer, Michael David
(86) International application number: PCT/IB2008/054806
(87) International publication number: WO 2009/063438

(56) References cited:
- EP-A- 0 051 967
- WO-A-2007/109841
- WO-A1-2007/143350
- CN-A- 1 057 245
- GB-A- 2 180 829
- JP-A- 55 018 501
- US-A1- 2003 013 166
- US-A1- 2003 104 208

## Description

### BACKGROUND

This invention relates to the removal of cyanide from aqueous streams and to the recovery of metal values from aqueous streams.

Mining operations, in particular gold mining operations, make use of cyanide in leaching steps to extract gold and other precious metals from ore. A portion of leaching solution is discharged as a residue slurry. Contained within the slurry is cyanide in the form of cyanide ions and weak acid dissociable cyanide (WAD cyanide) which is extremely toxic and must be destroyed before the slurry can be disposed of as an aqueous waste stream. According to the International Cyanide Code, WAD concentrations (calculated as WAD cyanide plus free cyanide) in waste streams must be less than 50 ppm.

There are many processes in the prior art which can be used to remove cyanide from aqueous streams, however these processes produce other toxic substances which must then be dealt with and/or are expensive to operate. An example of a prior art process is given by the document JP 55018501.

It is an object of this invention to provide an improved and economical process for removing cyanide and recovering metal values from aqueous streams.

### SUMMARY

This invention relates to a cyanide removal method for treating an aqueous stream containing cyanide, typically a tail stream from a carbon in leach (CIL) mining operation, wherein the aqueous stream containing cyanide is contacted with carbon under conditions wherein the Eh (oxygen reduction potential (ORP) measured in mV) of the aqueous stream is 0 or above, to remove cyanide, particularly WAD cyanide, from the stream.

The Eh may be from 0 - 500, typically from 0 - 300, preferably from 0 - 200 mV.

The carbon is preferably in particulate form, for example activated carbon manufactured from coconut shell having a particle size of 2-3 mm.

The carbon is added in an amount of 5-100 g/l, typically 10-60 g/l, preferably 20-60 g/l of the stream containing cyanide.

Preferably, the pH of the aqueous stream is buffered to from 7 - 9. The buffering preferably takes place over a period of 0.5 - 1.5 hours, typically about 1 hour.

The Eh of the stream containing cyanide may be controlled by passing the stream containing cyanide through an oxygenating device in multiple passes, before or after the addition of cyanide to the stream.

The oxygenating device is typically operated at a pressure of from above 1 bar up to about 10 bar, typically about 2.5 bar.

Oxygen is preferably introduced into the oxygenating device in the form of bubbles, the bubbles preferably having a size of from 1 micron to 1000 microns, preferably 1 to 500 microns, typically an average of 100 microns. Advantageously, the oxygenating device provides high shearing to the stream.

Preferably, the oxygen line pressure at the point of injection of oxygen is above the pressure of the oxygenating device, typically at a pressure of about 10 bar.

The Oxygen consumption of the oxygenating device may be from 0.25 kg/t to 200 kg/t liquid.

Preferably, the aqueous stream is re-circulated through the oxygenation device in 2 or more passes, typically from 2 to 300, preferably 2 to 200, more preferably 2 to 50, more preferably 2 to 10, most preferably 2 to 5 passes

In a first embodiment of a process of the invention, a tail stream from a carbon in leach (CIL) mining operation containing cyanide is:
treated to control the Eh (oxygen reduction potential (ORP) measured in mV) to 0 or above, preferably from 0 - 500, more preferably from 0 - 300, preferably from 0 - 200 mV; and
contacted with carbon to remove cyanide, particularly WAD cyanide, from stream.

The carbon is preferably in particulate form, for example activated carbon manufactured from coconut shell having a particle size of 2-3 mm.

The carbon is added in an amount of 5-100 g/l, typically 10-60 g/l, preferably 20-60 g/l of the stream containing cyanide.

Preferably, the pH of the aqueous stream is buffered to from 7 - 9.

Preferably, the treatment to control the Eh is with an oxygenating device as described above.

The stream may be passed through the oxygenating device in from 2 to 300, typically 2 to 200, preferably 2 to 50, more preferably 2 to 10, more preferably 2 to 5, most preferably 2.5 passes.

Preferably, the contact with carbon takes place in a tank separate from the oxygenation device. The tank is typically open to the atmosphere.

The cyanide removal preferably takes place in multiple stages.

In a second embodiment of a process of the invention, an aqueous stream containing metal values is:
treated in a pre-oxidation stage; and
subjected to a CIL process;
wherein the pre-oxidation stage is conducted under conditions to provide an Eh (oxygen reduction potential (ORP) measured in mV) of the aqueous stream in the CIL process of 0 or above, preferably from 0 - 500, more preferably from 0 - 300, most preferably from 0 - 200 mV.

Preferably, the treatment to control the Eh is with an oxygenating device as described above.

The stream may be passed through the oxygenating device in from 2 to 300, typically 2 to 200, preferably 2 to 50, more preferably 5 to 15, most preferably 10 passes.

The pre-oxidation stage preferably takes place at a pH of 9 to 10.

In a third embodiment a process of the invention, an aqueous stream containing metal values is:
treated an accelerated leach, wherein 0.1 - 20 kg/t (as required) cyanide is added to the stream in an oxygenating device as described above.

The stream may be passed through the oxygenating device in from 2 to 300, typically 2 to 200, preferably 2 to 50, more preferably 5 to 10, most preferably 5.

Preferably, the Eh of the stream in the oxygenating device is greater than 0.

A preferred integrated process according to the invention for leaching an aqueous stream containing metal values is described below:
1) subjecting the stream to an optional pre-oxidation first stage as described in the second embodiment of the invention;
2) subjecting the stream to an optional accelerated leach stage as described in the third embodiment of the invention;
3) subjecting the stream to CIL and;
4) subjecting a tail stream from the CIL to a cyanide removal stage (as described in the first embodiment) by contacting the stream with a carbon catalyst to remove cyanide, especially WAD cyanide, from the stream, wherein the Eh of the stream is controlled to 0 or above, preferably from 0 - 500, more preferably from 0 - 300, most preferably from 0 - 200 mV.

### DESCRIPTION OF EMBODIMENTS

This invention relates to a method of removing cyanide in the form of free cyanide (cyanide ions i.e. CN⁻) and weak acid dissociable cyanide (WAD) from an aqueous stream. WAD is cyanide complexed with metals such as Cu. The method finds particular application in removing cyanide from a tail stream from a carbon in leach (CIL) mining operation.

The method of the invention is carried out by contacting an aqueous stream containing cyanide with carbon under conditions wherein the Eh (oxygen reduction potential (ORP) measured in mV) of the aqueous stream is 0 or above. The Eh may be from 0 - 500, typically from 0 - 300, preferably from 0 - 200 mV. The carbon is preferably in particulate form, for example activated carbon manufactured from coconut shell having a particle size of 2-3 mm. The carbon catalyst is added in an amount of 5-100 g/l, typically 10-60 g/l, preferably 20-60 g/L of the stream containing cyanide. Advantageously the pH of the solution is buffered to from 7 - 9.

In accordance with the present invention, the desired Eh (above 0) of a stream containing cyanide is controlled by, if necessary adjusting the pH to 7 - 9, and pumping the stream through an in-line high shear static oxygenation device, while re-circulating it on the tank or any other vessel including pipe columns. The stream is pumped through the oxygenating device generating a slurry back-pressure from 1 bar up to 10 bar, typically about 2.5 bar. The back-pressure of the device is read off a pressure gauge. Oxygen is injected into the device via an appropriately sized flow meter. The oxygen line pressure at the point of injection should be above the back-pressure of the oxygenating device, preferably about 10 bar to overcome the slurry back-pressure of the device and to achieve the desired oxygen flow rates. Non-return valves should be installed on the oxygen lines to prevent the ingress of slurry into the oxygen system.

The number of passes through the oxygenation device could range from 2 or more to 300 passes. The bubble size generated in the oxygenation device could range from 1 micron to 1000 microns, preferably 1 to 500 microns, typically an average size of 100 microns. The stream should be pumped at a rate of 5 to 20 m/s, typically about 10 m/s, through the oxygenating device to create the internal shear within the unit. The back-pressure of the device could range from above 1 bar up to about 10 bar. The device utilises a non-blinding porous media (such as a PTFE fritte) arrangement or a slot or plate nozzle venturi system to inject tiny oxygen bubbles into the pulp. The subsequent pressure chamber system causes the rapid expansion and contraction of these bubbles (cavitation), which assists with the dissolution of the oxygen. The design of the device discourages bubble coalescence, and the pressure hold-up (around 2.5 bar but can range from above 1 bar up to about 10 bar) also encourages oxygen dissolution. Oxygen consumption could range from 20 kg/t to 200 kg/t.

An oxygenating device as described above and manner in which it is operated is able to raise Eh (oxygen reduction potential (ORP) which is measured in volts) of the aqueous stream to a sufficiently high level so as to oxidize free and WAD cyanide to the cyanate (CNO-) ion. The cyanate ion decomposes over time to ammonia and carbon dioxide. With regard to the mechanism of carbon catalysis, it is believed that activated carbon adsorbs both the free and WAD cyanide facilitating the oxidation of the cyanide ion by oxygen. The reaction products (cyanate and metal ions) are then released back into solution. Although in the above described method the oxygenation takes place in the presence of the carbon catalyst, it is possible to conduct the oxygenation using the device and method described above prior to the introduction of the catalyst, with the subsequent introduction of the catalyst to the stream, and achieve the desired removal of cyanide.

It is also possible to control the Eh of a aqueous stream to the desired levels in other ways. For example, this could be achieved by adding acid and/or CuSO₄ to the solution. These reagents could also be used in conjunction with an oxygenating device as described above. However, these method/s are not as cost-effective as the present invention as they require the use of additional reagents and can also produce other toxic substances in the stream.

Comparative Examples 1, 2, and 3 show the results of tests conducted on CIL samples from a gold plant where the samples are subjected to an oxygenating device as described above in multiple passes and treated with different amounts of activated carbon. In Examples 1, 2, and 3, multiple passes (up to 80) and up to 50 g/l carbon failed to reduce the CN Wad to an acceptable level below 50 ppm. In Examples 2 and 3, the samples were buffered to pH 9 and 8 respectively and even this and multiple passes (up to 30) and up to 50 g/l carbon failed to reduce the CN Wad to an acceptable level below 50 ppm. In Example 4, however, where the Eh is greater than 0, the level of CN Wad was successfully reduced to below 50 ppm when treated with 50 g/l, irrespective of the number of passes.

In Example 5, a tail from Example 4 was subjected to the process at a Eh greater than 0, and the CN Wad was successfully reduced to less than 1 ppm. In Example 6, a tail from Example 5 was subjected to the process at a Eh greater than 0, and the CN Wad was consistently reduced to less than 1 ppm. This shows the benefit that can be obtained with multi-stages.

Example 7 shows the process carried out with the addition of CuSO₄. It is only when the Eh is greater than 0 that the level of CN Wad was successfully reduced to below 50 ppm, when treated with 50 g/l of carbon.

Example 9 shows gold recoveries that can be obtained from a CIL feed stream from a mining operation which has been treated with a process of the present invention.

The above method may be used in an integrated process for leaching an aqueous stream containing metal values (typically precious metals), such as a feed stream in carbon in leach (CIL) mining operation.

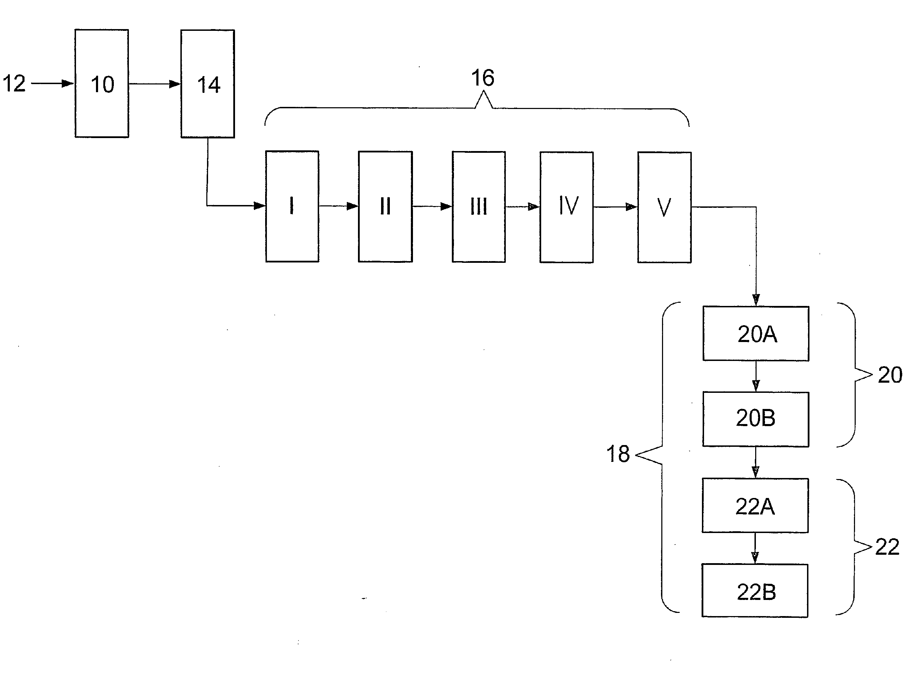

With reference to the Drawing, in a first (optional) pre-oxidation stage 10, a feed stream 12 containing precious metals is passed through an oxygenating device as described above in multiple passes (from 2 to 300, typically 2 to 200, preferably 2 to 50, more preferably 5 to 10, most preferably 5) in a pre-oxidation step.

FeS minerals consume cyanide to various degrees depending on their reactivity. Reactivity increases in the following order: arsenopyrite < pyrite < marcasite < pyrrhotite.

The following equation describes the reaction:

FeS + 1/2O₂ + 7CN- + H₂O = Fe(CN)₆⁴⁻ + SCN- + 2OH- (1)

Equation 1 above illustrates how Fe²⁺ in solution consumes cyanide by forming the hexa-ferrocyanide complex. Sulphur consumes only one cyanide ion to form thiocyanate. The ferrous ion alone can therefore consume up to six times that of its solution concentration of cyanide ion. This undesirable side reaction can result in unnecessary high cyanide consumption.

Iron is generally present in soluble form as a mix of Fe²⁺ and Fe³⁺ with the proportion of the two being dictated by the redox potential of the solution.

It has been found that the formation of the hexa-ferrocyanide complex may be counteracted by this pre-oxidation stage, prior to a leach, which promotes the formation of ferric ions and the subsequent precipitation of ferric hydroxide with the addition of lime.

Additionally, a pre-oxidation stage promotes the formation of a ferric hydroxide passivating layer on the iron sulphide mineral surface, so reducing the rate of iron sulphide dissolution in the subsequent cyanide leach circuit.

The pre-oxidation stage preferably takes place at a pH of 9 to 10, to provide a pH of 9 at the tail in stage below (the oxidation steps naturally degrade the pH owing to the production of sulphuric acid from sulphur oxidation).

An advantage of the pre-oxidation stage is that it precipitates much of the iron and other base metals as hydroxides, so preventing them from consuming cyanide in the subsequent cyanidation stage. This reduces the cyanide consumption for a given free cyanide level in the leach and so reduce the cyanide load on the circuit, leaving lower levels of cyanide to be dealt with at the tail end of the plant.

A further advantage of the pre-oxidation stage is that Sulphur is oxidized, and this limits the formation of SCN⁻ when cyanide is added.

A further advantage of the pre-oxidation stage is that it causes almost complete hydrolysis of lime resulting in an almost zero protective alkalinity, to enable a natural decay of the pH mentioned above.

After the pre-oxidation stage, in an accelerated leach stage 14, the stream is subjected to an optional accelerated leaching step, by adding cyanide and using an oxygenating device as described above. This boosts kinetics and reduces the number of tanks required in the following CIL process.

It is widely accepted that Elsner's Equation, below, describes the gold leaching reaction:

4Au + 8NaCN + O₂ + H₂O = 4NaAu(CN)₂ + 4NaOH (2)

It can be seen from the equation that oxygen is a requirement for the leach. The balanced equation seems to suggest a CN:O₂ ratio of 8:1. However, work done by Habashi (which takes the diffusivity of cyanide and oxygen into account) seems to suggest that the ratio should be 6:1. E.g. if the free cyanide concentration is 150ppm, then the DO should be 25ppm for efficient utilization of the cyanide for leaching.

It is further widely accepted that increased rate of cyanidation can be achieved by the use of oxygen instead of air, under pressure if necessary, increased agitation and elevated temperatures (Stanley).

Conducting the accelerated leach stage 14 (adding 0.1 -1, typically 0.5 kg/t cyanide) using an oxidation device as described above in the manner described above multiple passes - from 2 to 300, typically 2 to 200, preferably 2 to 50, more preferably 5 to 10, most preferably 5). Extra precautions do however need to be taken if there is a preg-robber present in the ore. Precautionary measures include the operation of the high shear oxygenating device on a column with a residence time of under 25minutes and optionally with diesel addition to the recirculation vessel. Example 10 shows the benefits that can be attained using an accelerated leach step.

After the accelerated leach stage 14, the stream is subjected to a conventional carbon in leach (CIL) process 16 where it is treated in multiple tanks I - V. The CIL may take place in an agitated leach tank open to the atmosphere containing activated carbon.

After the CIL process 16, the stream is subjected to the cyanide removal process of the present invention - a tail stage 18. The stage 18 comprises contacting the stream with an Eh of greater than 0, typically 0 - 300, preferably 0 - 200 mV, with a particulate carbon catalyst at a concentration of from 5 - 100 g/l, typically 30 - 60 g/l, preferably 45 - 55 g/l, most preferably 50 g/l.

In this embodiment of the invention, the cyanide removal stage comprises multiple stages -first stage 20 and second stage 22.

In the first stage 20, the stream is introduced into an oxygenating device 20A as described above, if necessary adjusting the pH to 9 to 10, in multiple passes (from 2 to 300, typically 2 to 200, preferably 2 to 50, more preferably 2 to 10, more preferably 2 to 5, most preferably 2.5 passes) to bring the Eh of the stream to 0 or above, for example from 0 - 500, typically from 0 - 300, preferably from 0 - 200 mV. The stream is then introduced to a tank 20B, where it is contacted with 5-100 g/l, typically 10-60 g/l, preferably 20-60 g/L particulate carbon of the stream containing cyanide. This stage is able to reduce the amount of WAD cyanide in the stream to below 50 ppm.

The stream from the first stage is then subjected to the second stage 22, and is introduced into an oxygenating device 22A as described above, if necessary adjusting the pH to 9 to 10, in multiple passes (from 2 to 300, typically 2 to 200, preferably 2 to 50, more preferably 2 to 10, more preferably 2 to 5, most preferably 2.5 passes) to bring the Eh of the stream to 0 or above, for example from 0 - 500, typically from 0 - 300, preferably from 0 - 200 mV. The stream is then introduced to a tank 22B, where it is contacted with 5-100 g/l, typically 10-60 g/l, preferably 20-60 g/L particulate carbon of the stream containing cyanide. This stage is able to reduce the amount of WAD cyanide in the stream to below 10 ppm.

Further stages may be added to the tail stage 18, or the stream may be subjected to a further cyanide removal step by contacting the stream in an oxygenating device as described above with a copper, iron or zinc or graphite catalyst.

The pre-oxidation stage 10 and accelerator stage 14, although preferred, are optional and the process of the invention can be successfully carried out on a CIL tailing using the tail stage 18 without stages 10 and 14.

The process of the invention could also be carried out successfully without the tail stage 18, with removal of free and WAD cyanide taking place in the CIL stage 16. In this embodiment of the invention, the pH of the stream 12 is adjusted to pH to 9 to 10, and passed, in multiple passes (from 5 to 300, typically 10 to 200, preferably 10 to 50 passes), through an oxygenating device as described above is controlled to provide an Eh in the CIL process of the stream of 0 or above, for example from 0 - 500, typically from 0 - 300, preferably from 0 - 200 mV. The carbon which is ordinarily added to the CIL to adsorb leached gold also catalyses the cyanide destruction when the stream is at an Eh of 0 or above.

A key step of the process of the invention is to raise the Eh (ORP) of the pulp containing the cyanide species to be destroyed sufficiently, utilizing the oxygenating device in a carbon in leach tank. The activated carbon contained in the tank is essential as a catalyst for the oxidation of both free and WAD cyanide. Copper sulphate may be used in addition for more complete destruction. Iron and zinc sulphate may also be used but are less effective. In addition to destroying the free and WAD cyanide species, any residual undissolved gold will also be leached to yield extra revenue. Also the efficiency of gold adsorbtion by the activated carbon will be markedly improved.

The oxygenating device passes required for cyanide destruction need not be confined to a single tank and may be spread out across an entire tankfarm, provided that the total number of passes is sufficient to raise the Eh of the solution to a point high enough for cyanide destruction when contacted with carbon. With this in mind the oxygenating devices may be run optionally:
For pre-oxidation to reduce cyanide consumption by precipitating base metals and forming a surface film of ferric hydroxide on the mineral surface and providing the first stage for increasing the pulp Eh.
For an accelerated leach by running the oxygenating devices in a pipe column with cyanide to allow for a lower cyanide addition rate and to lower the cyanide load in the leach leaving less cyanide to be dealt with in the tail, and to provide another stage for raising the pulp Eh.
A first Carbon in Leach Tank can optionally be run with a carbon concentration not lower than 50g/l to enhance the catalytic effect of the carbon on the cyanide oxidation and also to fight any possible preg-robbers and so maximize gold recovery
A last Carbon in Leach tank can be optionally run at a carbon concentration of not below 50g/l to maximize on the catalytic effect of the carbon on the cyanide oxidation and also to reduce soluble gold losses to a minimum.

Advantages of the processes of the present invention are:
Cyanide is removed to below the maximum allowable 50ppm WAD by the International Cyanide Code.
Cyanide is destroyed to cyanate which decomposes over time to ammonia and carbon dioxide (all non toxic compounds).
Utilization of minimum additional reagents.
Simple and non hazardous to install.
Very cost effective (approximately 50 times cheaper than alternative processes on opex).
Reduced cyanide consumption and additional gold recovery which can cover the costs of the entire cyanide destruction process. Reagents are non-toxic and readily available on recovery plants. Reduced cyanide consumption (up to 25%) from the installation of a pre-oxidation stage and optimisation of the cyanide set point in conjunction with bottle rolls on the tails.
Higher gold loading on CIL Tank I owing to accelerated kinetics from running a high shear oxygenating device on a leach column before the CIL.
Lower dissolved gold losses owing to the longer contact time of dissolved gold with carbon from the accelerated leach kinetics and the higher carbon inventory proposed for the first and last tanks. Reduced lime consumption by running a lower pH on the plant feed Steadier recoveries and a more "forgiving" plant.
The cyanide destruction process of the present invention also yields incremental gold recovery (of gold which would have been lost to the tails) which can pay for the cost of the destruction process.

The invention will now be described in more detail with reference to the following non-limiting Examples.

In the Examples, the oxygenating device is an Aachen™ Aerator available from Maelgwyn Mineral Services Ltd.

In the Examples, the following terms have the following meanings:

| | |
|---|---|
| UD | : Undetected |
| N/R | : Not requested |
| CN free by ISE | : Is theoretically the same as titration (but in practice is closer to stability constant calculated CN free) |
| CN WAD | : Does include CN free (and Zn, Cu and Ni complexed species) |
| CN Total | : CN free, rest of CN WAD and CN SAD accumulated |
| CN SCN | : Cyanide part of thiocyanate |
| CN | : CNO is the oxidation product of cyanide. |
| g | : gram/litre carbon added to the bottle rolls. |

### Example 1

### 1.1 Procedure

CIL tail sample from a gold Plant was used.
pH as received, no buffering carried out.
Aachen run 80 passes maximum.
Temperature, pH and Eh recorded at regular intervals.
Pulp samples were extracted after predetermined Aachen passes and bottle rolled for 24 hours with increasing carbon concentration for each sample taken.

### 1.2 Tables of results

**Table 1 - Temperature, pH and Eh readings during Aachen passes**

| Aachen passes | Temp, °C | pH | Eh, mV SHE |
|---|---|---|---|
| 0 | 18.0 | 10.96 | -90.0 |
| 20 | 24.7 | 10.81 | -92.1 |
| 40 | 30.5 | 10.61 | -111.1 |
| 60 | 35.2 | 10.43 | -140.8 |
| 80 | 37.8 | 10.35 | -128.4 |

**Table 2 - Analysis of products after cyanide destruction**

| Run | Conditions | CN free ISE, ppm | CN Wad ppm | CN Total Ppm | CN SCN ppm | CNO ppm | NO₂ ppm | NO₃ ppm |
|---|---|---|---|---|---|---|---|---|
| 1 | Head | 83.6 | 1149 | 1791 | 971 | 350 | 4 | 11 |
| 2 | 0 pass-0g | 25.4 | 1246 | 1981 | 735 | N/R | N/R | N/R |
| 3 | 0 pass-10g | 63.9 | 830 | 1469 | 841 | N/R | N/R | N/R |
| 4 | 0 pass-20g | 59.2 | 652 | 1268 | 735 | N/R | N/R | N/R |
| 5 | 0 pass-30g | 45.3 | 429 | 1036 | 686 | N/R | N/R | N/R |
| 6 | 0[ass-40g | 33.3 | 338 | 994 | 776 | N/R | N/R | N/R |
| 7 | 0 pass-50g | 27.5 | 238 | 910 | 478 | 460 | 3 | 17 |
| 8 | 20pass-0g | 21.0 | 970 | 1577 | 878 | 460 | 3 | 17 |
| 9 | 20pass-10g | 50.8 | 771 | 1394 | 1050 | N/R | N/R | N/R |
| 10 | 20pass-20g | 47.0 | 650 | 1275 | 1150 | N/R | N/R | N/R |
| 11 | 20pass-30g | 34.6 | 474 | 1127 | 802 | N/R | N/R | N/R |
| 12 | 20pass-40g | 38.8 | 419 | 1027 | 809 | N/R | N/R | N/R |
| 13 | 20pass-50g | 22.7 | 278 | 945 | 541 | 510 | 3 | 17 |
| 14 | 80pass-0g | 5.3 | 880 | 1469 | 1058 | 725 | 3 | 17 |
| 15 | 80pass-10g | 35.9 | 597 | 1265 | 1020 | N/R | N/R | N/R |
| 16 | 80pass-20g | 43.5 | 379 | 1058 | 836 | N/R | N/R | N/R |
| 17 | 80pass-30g | 27.5 | 293 | 887 | 703 | N/R | N/R | N/R |
| 18 | 80pass-40g | 25.4 | 227 | 952 | 610 | 520 | 3 | 17 |
| 19 | 80pass-50g | 20.2 | 174 | 902 | 583 | 530 | 3 | 17 |

### 1.3 Discussion

The result of Example 1 was unsuccessful (WAD cyanide was above 50ppm target)
Failure can be attributed to negative Eh readings and pH >10.
High Aachen passes and high carbon concentration did not reduce WAD to 50ppm.
Indicates mechanism of adsorption onto carbon alone is not sufficient.

### Example 2

### 2.1 Procedure

CIL tail sample from a gold Plant was used.
Buffered for 1 h with 3.26kg/t H₂SO₄ to pH 9
Aachen run 30 passes maximum
Temperature, pH and Eh recorded at regular intervals
Pulp samples extracted at timed intervals and bottle rolled for 24 hours with increasing carbon concentration for each sample taken.

### 2.2 Tables of results

**Table 3 - Temperature, pH and Eh and readings during Aachen passes**

| Aachen passes | Temp, °C | pH | Eh, mV SHE |
|---|---|---|---|
| 0 | 15.3 | 9.07 | -311 |
| 10 | 20.9 | 9.25 | -344.1 |
| 20 | 25.2 | 9.33 | -354.8 |
| 30 | 29.3 | 9.42 | -377.2 |

**Table 4 - Analysis of products after cyanide destruction**

| Run | Conditions | CN free ISE, ppm | CN Wad ppm | CN Total ppm | CN SCN ppm | CNO ppm | NO₂ ppm | NO₃ ppm |
|---|---|---|---|---|---|---|---|---|
| 1 | Head | 39.2 | 627 | 934 | ND | 275 | UD | 20.5 |
| 2 | 0 pass-0g | 64.3 | 954 | 1307 | ND | 367 | UD | 20.5 |
| 3 | 0 pass-20g | 21.3 | 425 | 694 | ND | 667 | UD | 20.5 |
| 4 | 0 pass-50g | 2.5 | 118 | 387 | ND | 875 | UD | 20.5 |
| 5 | 0 pass-0g | 69.3 | 894 | 1157 | ND | 350 | UD | 15.4 |
| 6 | 10pass-20g | 18.3 | 416 | 689 | ND | 858 | UD | 20.5 |
| 7 | 10pass-50g | 2.5 | 101 | 374 | ND | 1033 | UD | 20.5 |
| 8 | 20pass-0g | 36.3 | 814 | 1046 | ND | 417 | UD | 20.5 |
| 9 | 20pass-20g | 17.0 | 379 | 658 | ND | 783 | UD | 25.6 |
| 10 | 20pass-50g | 1.7 | 93.5 | 358 | ND | 917 | UD | 20.6 |
| 11 | 30pass-0g | 33.6 | 798 | 1094 | ND | 367 | UD | 20.5 |
| 12 | 30pass-20g | 14.6 | 343 | 621 | ND | 683 | UD | 20.5 |
| 13 | 30pass-50g | 1.4 | 82.4 | 384 | ND | 595 | UD | 20.5 |

### 2.3 Discussion

Example 2 was unsuccessful (WAD cyanide was above 50ppm target), even though pH was buffered to 9.
Can be attributed to negative Eh values.

### Example 3

### 3.1 Procedure

CIL tail sample from a gold Plant was used.
pH buffered to 8 with 5.89kg/t H₂SO₄ for 1 hour
Aachen run 30 passes
Temperature, pH and Eh recorded at regular intervals
Pulp samples extracted at timed intervals and bottle rolled for 24 hours with increasing carbon concentration for each samples taken.

### 3.2 Tables of results

**Table 5 - Temperature, pH and Eh and readings during Aachen passes**

| Aachen passes | Temp, °C | pH | Eh, mV SHE |
|---|---|---|---|
| 0 | 11.5 | 7.98 | -382.3 |
| 10 | 23.9 | 8.89 | -315.6 |
| 20 | 28.4 | 9.23 | -345.4 |
| 30 | 32.6 | 9.46 | -351.1 |

**Table 6 - Analysis of products after cyanide destruction**

| Run | Conditions | CN free ISE, ppm | CN Wad ppm | CN Total ppm | CN SCN ppm | CNO ppm | NO₂ ppm | NO₃ ppm |
|---|---|---|---|---|---|---|---|---|
| 1 | Head | 330.1 | 1299 | 1599 | NR | 419 | UD | 24 |
| 2 | 0 pass-0g | 113.7 | 909 | 1227 | NR | 338 | UD | 16 |
| 3 | 0 pass-20g | 31.2 | 387 | 690 | NR | 581 | UD | 20 |
| 4 | 0 pass-50g | 9.2 | 93.1 | 386 | NR | 702 | UD | 24 |
| 5 | 10 pass-0g | 77.7 | 767 | 1100 | NR | 311 | UD | 24 |
| 6 | 10pass-20g | 25.8 | 335 | 671 | NR | 486 | UD | 24 |
| 7 | 10pass-50g | 7.6 | 56.7 | 358 | NR | 481 | UD | 28.1 |
| 8 | 20pass-0g | 57.3 | 747 | 1089 | NR | 250 | UD | 24 |
| 9 | 20pass-20g | 23.0 | 302 | 627 | NR | 483 | UD | 28.1 |
| 10 | 20pass-50g | 8.5 | 79.9 | 411 | NR | 675 | UD | 24 |
| 11 | 30pass-0g | 51.1 | 722 | 1087 | NR | 257 | UD | 28.1 |
| 12 | 30pass-20g | 24.8 | 294 | 658 | NR | 527 | UD | 24 |
| 13 | 30pass-50g | 7.9 | 70.3 | 406 | NR | 311 | UD | 20 |

### 3.3 Discussion

Example 3 was unsuccessful (WAD cyanide was above 50ppm target) Can be attributed to negative Eh values
1 h buffering time is insufficient to yield a positive Eh.

### Example 4

### 4.1 Procedure

CIL tail sample from a gold Plant was used.
Buffered to pH 7 with 14.6kg/t H₂SO₄ for 4hrs.
Aachen run 30 passes maximum.
Temperature, pH and Eh recorded at regular intervals and tabulated.
Pulp samples extracted at timed intervals and bottle rolled for 24 hours with increasing carbon concentration for each samples taken.

### 4.2 Tables of results

**Table 7 - Temperature, pH and Eh and readings during Aachen passes**

| Aachen passes | Temp, °C | pH | Eh, mV SHE |
|---|---|---|---|
| 0 | 19.0 | 7.22 | +23.4 |
| 10 | 26.4 | 7.36 | +21.2 |
| 20 | 31.9 | 7.39 | +15.6 |
| 30 | 36.0 | 7.44 | 18.1 |

**Table 8 - Analysis of products after cyanide destruction**

| Run | Conditions | CN free ISE, ppm | CN Wad ppm | CN Total Ppm | CN SCN ppm | CNO ppm | NO₂ ppm | NO₃ ppm |
|---|---|---|---|---|---|---|---|---|
| 1 | Head | 97.7 | 827 | 944 | ND | 300 | N/D | 29.5 |
| 2 | 0 pass-0g | 4.0 | 668 | 843 | ND | N/R | N/R | N/R |
| 3 | 0 pass-20g | 2.1 | 82.3 | 189 | ND | N/R | N/R | N/R |
| 4 | 0 pass-50g | 0.2 | 8.75 | 93.6 | ND | N/R | N/D | 24.6 |
| 5 | 10pass-0g | 2.7 | 581 | 753 | ND | N/R | N/R | N/R |
| 6 | 10pass-20g | 2.2 | 87.5 | 204 | ND | N/R | N/R | N/R |
| 7 | 10pass-50g | 0.8 | 9.87 | 92.9 | ND | N/R | N/D | 24.6 |
| 8 | 20pass-0g | 1.9 | 598 | 776 | ND | N/R | N/R | N/R |
| 9 | 20pass-20g | 1.5 | 77.8 | 197 | ND | N/R | N/R | N/R |
| 10 | 20pass-50g | 0.7 | 7.95 | 87.9 | ND | N/R | N/D | 29.5 |
| 11 | 30pass-0g | 1.7 | 643 | 813 | ND | N/R | N/R | N/R |
| 12 | 30pass-20g | 1.7 | 61.5 | 161 | ND | N/R | N/R | N/R |
| 13 | 30pass-50g | 0.8 | 7.55 | 85.5 | ND | N/R | N/D | 39.0 |

### 4.3 Discussion

Example 4 was successful - reducing CN Wad from 827 ppm to 7.55 ppm, and reducing CN total from 944 ppm to 85.5 ppm.
Positive Eh values
Increased buffering time (1h to 4h) beneficial
50g/L carbon concentration consistently gave <10ppm WAD

### Example 5

### 5.1 Procedure

Sample was Aachen tail from Example 4, agitated for 24h with 50g/l carbon
Screened out carbon
Buffered pH to 7 with 2.09kg/t H₂SO₄
Aachen run 30 passes
Temperature, pH and Eh recorded at regular intervals

### 5.2 Tables of results

**Table 9 - Temperature, pH and Eh and readings during Aachen passes**

| Aachen passes | Temp, °C | pH | Eh, mV SHE |
|---|---|---|---|
| 0 | 27.6 | 7.19 | +86.7 |
| 10 | 23.6 | 7.21 | +79.6 |
| 20 | 33.7 | 7.29 | +81.6 |
| 30 | 38.7 | 7.23 | +80.5 |

**Table 10 - Analysis of products after cyanide destruction**

| Run | Conditions | CN free ISE, ppm | CN Wad ppm | CN Total ppm | CN SCN ppm | CNO ppm | NO₂ ppm | NO₃ ppm |
|---|---|---|---|---|---|---|---|---|
| 1 | Head | 0.3 | 3.72 | 27.3 | ND | 100 | N/D | 24.6 |
| 2 | 0 pass-0g | 0.2 | 0.813 | 6.32 | ND | N/R | N/R | N/R |
| 3 | 0 pass-20g | 0.1 | 0.100 | 1.26 | ND | N/R | N/R | N/R |
| 4 | 0 pass-50g | 0.0 | 0.045 | 10.8 | ND | N/R | N/D | 9.8 |
| 5 | 10 pass-0g | 0.1 | 0.487 | 8.56 | ND | N/R | N/R | N/R |
| 6 | 10pass-20g | 0.1 | 0.096 | 12.0 | ND | N/R | N/R | N/R |
| 7 | 10pass-50g | 0.0 | 0.027 | 9.63 | ND | 83.3 | N/D | 9.8 |
| 8 | 20pass-0g | 0.0 | 0.327 | 9.3 | ND | N/R | N/R | N/R |
| 9 | 20pass-20g | 0.0 | 0.113 | 11.0 | ND | N/R | N/R | N/R |
| 10 | 20pass-50g | 0.0 | 0.030 | 7.98 | ND | 66.7 | N/D | 9.8 |
| 11 | 30pass-0g | 0.0 | 0.253 | 8.95 | ND | N/R | N/R | N/R |
| 12 | 30pass-20g | 0.0 | 0.121 | 9.98 | ND | N/R | N/R | N/R |
| 13 | 30pass-50g | 0.0 | 0.032 | 8.32 | ND | 50.0 | N/D | 9.8 |

### 5.3 Discussion

Example 5 was successful - reducing CN Wad from 3.72 ppm to 0.032 ppm, and reducing CN total from 27.3 ppm to 8.32 ppm.
Positive Eh values (more positive than Test 8)
WAD CN < 1 ppm consistently achieved.
Shows that multistaging of the Aachening and carbon contact steps yields exceptionally low WAD values (<1ppm)

### Example 6

### 6.1 Procedure

Sample was tail from Example 5, agitated for 24h with 50g/l carbon Screened out carbon
Buffered to pH 7 with 1.56kg/t H₂SO₄
Aachen run for 30 passes
Temperature, pH and Eh recorded at regular intervals

### 6.2 Tables of results

**Table 11 - Temperature, pH and Eh and readings during Aachen passes**

| Aachen passes | Temp, °C | pH | Eh, mV SHE |
|---|---|---|---|
| 0 | 14.4 | 7.16 | +130.6 |
| 10 | 28.1 | 7.22 | +94.6 |
| 20 | 33.8 | 7.24 | +96.1 |
| 30 | 37.6 | 7.24 | +92.4 |

**Table 12 - Analysis of products after cyanide destruction**

| Run | Conditions | CN free ISE, ppm | CN Wad ppm | CN Total Ppm | CN SCN ppm | CNO ppm | NO₂ ppm | NO₃ ppm |
|---|---|---|---|---|---|---|---|---|
| 1 | Head | 0 | 0.787 | 5.14 | ND | 66.7 | N/D | 19.7 |
| 2 | 0 pass-0g | 0 | 0.393 | 3.59 | ND | N/R | N/R | N/R |
| 3 | 0 pass-20g | 0 | 0.067 | 3.24 | ND | N/R | N/R | N/R |
| 4 | 0 pass-50g | 0 | 0.030 | 3.13 | ND | 100 | N/D | 14.8 |
| 5 | 10 pass-0g | 0 | 0.337 | 3.15 | ND | N/R | N/R | N/R |
| 6 | 10pass-20g | 0 | 0.052 | 3.22 | ND | N/R | N/R | N/R |
| 7 | 10pass-50g | 0 | 0.026 | 1.94 | ND | 58.3 | N/D | 9.8 |
| 8 | 20pass-0g | 0 | 0.257 | 3.64 | ND | N/R | N/R | N/R |
| 9 | 20pass-20g | 0 | 0.043 | 2.91 | ND | N/R | N/R | N/R |
| 10 | 20pass-50g | 0 | 0.025 | 1.70 | ND | 41.7 | N/D | 9.8 |
| 11 | 30pass-0g | 0 | 0.153 | 3.21 | ND | N/R | N/R | N/R |
| 12 | 30pass-20g | 0 | 0.050 | 2.84 | ND | N/R | N/R | N/R |
| 13 | 30pass-50g | 0 | 0.040 | 1.75 | ND | 75 | N/D | 9.8 |

### 6.3 Discussion

Example 6 was successful - reducing CN Wad from 0.78 ppm to 0.040 ppm, and reducing CN total from 5.14 ppm to 1.75 ppm.
Positive Eh values (more positive than Example 5)
WAD CN < 1ppm consistently achieved.
Again shows that multistaging is extremely advantageous.

### Example 7

### 7.1 Procedure

CIL tail sample from a gold Plant was used.
Buffered to pH 9 with 3.93kg/t H₂SO₄ for 1 h
Added 0.53kg/t CuSO₄ after 1 pass
Added 1.0kg CuSO₄ after 11 passes
Added 2.0kg/t CuSO₄ after 21 passes
Aachen run 30 passes maximum
Temperature, pH and Eh recorded at regular intervals
Pulp samples extracted at timed intervals and bottle rolled for 24 hours with increasing carbon concentration for each sample taken

### 7.2 Table of results

**Table 13 - Temperature, pH and Eh and readings during Aachen passes**

| Aachen passes | Temp, °C | pH | Eh, mV SHE |
|---|---|---|---|
| 0 | 12.0 | 8.79 | -340 |
| 10 | 18.9 | 9.10 | -299 |
| 20 | 23.8 | 9.02 | -100 |
| 30 | 28.9 | 9.07 | 0.1 |

**Table 14 - Analysis of products after cyanide destruction**

| Run | Conditions | CN free ISE, ppm | CN Wad ppm | CN Total Ppm | CN SCN ppm | CNO ppm | NO₂ ppm | NO₃ ppm |
|---|---|---|---|---|---|---|---|---|
| 1 | Head | 305.9 | 1285 | 1564 | NR | 401 | UD | 24 |
| 2 | 0 pass-0g | 64.3 | 958 | 1310 | NR | 387 | UD | 16 |
| 3 | 0 pass-20g | 23.0 | 451 | 836 | NR | 668 | UD | 20 |
| 4 | 0 pass-50g | 10.3 | 119 | 483 | NR | 798 | UD | 24 |
| 5 | 10pass-0g | 45.6 | 879 | 1226 | NR | 387 | UD | 24 |
| 6 | 10pass-20g | 19.7 | 397 | 767 | NR | 757 | UD | 24 |
| 7 | 10pass-50g | 7.3 | 96.6 | 453 | NR | 774 | UD | 28.1 |
| 8 | 20pass-0g | 17.6 | 897 | 1196 | NR | 340 | UD | 24 |
| 9 | 20pass-20g | 15.7 | 331 | 692 | NR | 434 | UD | 28.1 |
| 10 | 20pass-50g | 6.5 | 98.5 | 451 | NR | 387 | UD | 24 |
| 11 | 30pass-0g | 5.2 | 83.2 | 1047 | NR | 522 | UD | 28.1 |
| 12 | 30pass-20g | 5.4 | 192 | 573 | NR | 270 | UD | 24 |
| 13 | 30pass-50g | 2.1 | 24.0 | 399 | NR | 176 | UD | 20 |

### 7.3 Discussion

### Negative Eh values

Example 7 only became successful after Eh increased from negative to zero.
Other essential conditions are pH 9 and 50g/l carbon addition to the bottle roll.

### Example 8

### 8.1 Procedure

Sample was CIL tail after Aachen run (10 passes) and 36 hours gold leach. Upfront pH was maintained in the range 9.5 to 10 utilising the Aachen to completely react the lime and render little to no protective alkalinity, in order to achieve pH decay residual value of 8 to 8.5 after gold leaching. Samples were extracted at timed intervals (500ml slurry) and bottle-rolled for 24 hours with increasing carbon concentration for the different samples. 0.5kg/t cyanide was added for the leach.

pH and Eh was recorded at regular intervals (Eh remained positive). Accompanying tables show Temperature, pH, and Eh readings from tests.

### 8.2 Tables of results

**Table 15 - pH, Eh and Temperature readings during cyanide destruction**

| Aachen Passes | Temp, °C | Ph | Eh, mV SHE |
|---|---|---|---|
| 0 | 14.0 | 8.06 | +117.0 |
| 10 | 25.8 | 8.68 | +114.4 |
| 20 | 32.6 | 8.61 | +106.0 |
| 30 | 36.9 | 8.51 | +106.6 |
| 40 | 41.3 | 8.44 | +90.1 |
| 50 | 44.6 | 8.35 | +87.9 |

**Table 16 - Analysis of products after cyanide destruction**

| Sample Identity(all ex-CIL tail) | CN WAD, ppm | CN Total, ppm | CNO, ppm | NO₂, ppm | NO₃, ppm |
|---|---|---|---|---|---|
| Head | 0.012 | 7.32 | n/d | n/d | n/d |
| 0 min-0g | 0.006 | 6.33 | n/d | n/d | n/d |
| 0 min-50g | 0.007 | 5.46 | n/d | n/d | n/d |
| 10min-0g | 0.004 | 5.75 | n/d | n/d | n/d |
| 10min-50g | 0.008 | 6.94 | n/d | n/d | n/d |
| 20min-0g | 0.016 | 5.27 | n/d | n/d | n/d |
| 20min-50g | 0.003 | 6.91 | n/d | n/d | n/d |
| 30min-0g | 0.008 | 5.45 | n/d | n/d | n/d |
| 30min-50g | 0.004 | 6.94 | n/d | n/d | n/d |
| 40min-0g | 0.008 | 4.88 | n/d | n/d | n/d |
| 40min-50g | 0.004 | 6.94 | n/d | n/d | n/d |
| 50min-0g | 0.015 | 5.07 | n/d | n/d | n/d |
| 50min-50g | 0.003 | 5.11 | n/d | n/d | n/d |

### 8.3 Discussion

This test showed that the process of the present invention successfully brings WAD cyanide to well below 2ppm.

This testwork incorporated Aachen pre-conditioning where the objective was to oxidise Fe2+ to Fe3+ and precipitate as a hydroxide (along with any other base metals that may be present viz Cu, Ni, Zn and Pb). These base metals would report as SAD and WAD complexes which would have to be dealt with at the tail end of the plant. Precipitating them out thus relieves the load on the detox at the tail end. The effectiveness of this methodology is bourne out by the low WADs feeding the process.

The purpose of the pre-conditioning step is to react more fully, any unreacted lime and so ensure that there is minimum protective alkalinity down the tankfarm. This, coupled with a pH range of between 9.5 and 10 in the pre-conditioning step, allows for a natural decay in the pH to between 8 and 8.5 in the tail. This natural decay of the pH and rise in the Eh would be further assisted by the running of a process of the invention on the tail end of the plant.

Although this particular test showed extremely low WADs, a multistage is still recommended at the tail end of a plant to give more flexibility with the parameters and a continued guarantee of success in the long term. In addition, the added benefit of having a safety net for gold leaching and adsorbtion is a further plus. Soluble losses can easily be reduced to zero and this financial benefit could pay for the costs of the process of the present invention.

Total cyanide was also reduced to below 10 ppm. No cyanate, nitrite or nitrate was detected.

For a plant application, following is recommended (assuming 11 Tanks):
5 Aachen passes for pre-oxidation on Tank1 (Stage 10 in the Drawing).
5 Aachen passes for an accelerated leach (with cyanide) on Tank 2 (Stage 14 in the Drawing).
5 CIL tanks (Stage 16 in the Drawing)
2.5 Aachen passes on Tank 8 (Stage 20A in the Drawing) without carbon.
50g/l carbon concentration in Tank 9 (Stage 20B in the Drawing).
2.5 Aachen passes on Tank 10 with no carbon (Stage 22A in the Drawing)
50g/l carbon concentration in Tank 11 (Stage 22B in the Drawing).
Carbon would be added into Tank 11; then pumped to Tank 9; then pumped to Tank 7, and then pumped up the train as per normal

### Example 9

### Test Procedure

Four Aachen™ Reactor test runs were performed on CIL tailings from a gold plant. Samples were taken from the plant in slurry form containing the residual cyanide and stored in dark containers between test runs.

The following procedure was adopted for the various test runs:

### Residue Run 1

30 litres of sample was transferred "as received" into the Aachen™ recirculation tank
The Aachen™ was run for a total of 40 minutes
Samples were extracted at times 0, 10, 20, 30 and 40 minutes
CuSO₄ was added, after the 30 minute sample was taken, to give 50ppm Cu²⁺ in solution in the Aachen Recirculation Tank
Suitable aliquots of the samples taken were submitted for analysis in addition to 24 hour bottle rolls being performed Two bottle rolls were performed at time 30:
One "as is"
One with CuSO₄ added to give 50ppm Cu²⁺ in solution in the bottle roll

### Residue Run 2

30 litres of sample was transferred "as received" into the Aachen™ recirculation tank
CuSO₄ was added, before starting up the Aachen, to give 100ppm Cu²⁺ in solution
The Aachen™ was run for a total of 40 minutes
Samples were extracted at times 0, 10, 20, 30 and 40 minutes
Suitable aliquots of the samples taken were submitted for analysis in addition to 24 hour bottle rolls being performed

### Residue Run 3

30 litres of sample was transferred "as received" into the Aachen™ recirculation tank
CuSO₄ and FeSO₄ was added, before starting up the Aachen™, to give 100ppm Cu²⁺ and Fe²⁺ in solution
The Aachen™ was run for a total of 40 minutes
Samples were extracted at times 0, 10, 20, 30 and 40 minutes
Suitable aliquots of the samples taken were submitted for analysis in addition to 24 hour bottle rolls being performed

### Residue Run 4

30 litres of sample was ph corrected to 9 using 98% sulphuric acid before being transferred into the Aachen™ recirculation tank
CuSO₄ and FeSO₄ was added, after taking the 20 minute sample, to give 100ppm Cu²⁺ and Fe²⁺ in solution
The Aachen™ was run for a total of 40 minutes
Samples were extracted at times 0, 10, 20, 30 and 40 minutes
Suitable aliquots of the samples taken were submitted for analysis in addition to 24 hour bottle rolls being performed.

The pH of the stream was adjusted to 9 prior to treatment.

The results of the tests are provided in Table 17 below. With flow rates used, in table, 1 min equals 1 pass through the reactor.

**Table 17: Au on Solid Assays, Recoveries and free and WAD CN for Residue Cyanide Destruction Aachen™ Runs.**

| | **Au g/t** | **Au Recovery %** | **Free CN ppm** | **WAD CN ppm** | **Au in Solution ppm** | **% Free Cyanide Destroyed** | **% WAD Cyanide Destroyed** |
|---|---|---|---|---|---|---|---|
| **Run 1** | | | | | | | |
| **Head Time 0** | 0.35 | | 7.29 | 22.28 | 0.447 | | |
| **Head 5minutes** | 0.3 | 14.3 | 0 | 21.88 | 0.581 | 100.0 | 1.8 |
| **5 minutes CIL bottle roll tail** | 0.22 | 37.1 | 0 | 1.36 | 0.001 | 100.0 | 93.9 |
| **Head 10 minutes** | 0.26 | 25.7 | 0 | 21.77 | 0.578 | 100.0 | 2.3 |
| **10 minutes CIL bottle roll tail** | 0.210 | 40.0 | 0 | 1.34 | 0.001 | 100.0 | 94.0 |
| **Head 20 minutes** | 0.250 | 28.6 | 0 | 21.25 | 0.594 | 100.0 | 4.6 |
| **20 minutes CIL bottle roll tail** | 0.187 | 46.6 | 0 | 1.14 | 0.001 | 100.0 | 94.9 |
| **Head 40minutes** | 0.240 | 31.4 | 0 | 17.77 | 0.594 | 100.0 | 20.2 |
| **40 minutes CIL bottle roll tail** | 0.187 | 46.6 | 0 | 1.38 | 0.001 | 100.0 | 93.8 |

| **Run 2** | | | | | | | |
|---|---|---|---|---|---|---|---|
| **Head Time 0** | 0.35 | | 9.99 | 22.28 | 0.461 | | |
| **Head 5minutes** | 0.29 | 17.1 | 0 | 24.17 | 0.505 | 100.0 | 0.0 |
| **5 minutes CIL bottle roll tail** | 0.23 | 34.3 | 0 | 1.87 | 0.001 | 100.0 | 91.6 |
| **Head 10 minutes** | 0.28 | 20.0 | 0 | 23.4 | 0.542 | 100.0 | 0.0 |
| **10 minutes CIL bottle roll tail** | 0.210 | 40.0 | 0 | 1.14 | 0.001 | 100.0 | 94.9 |
| **Head 20 minutes** | 0.280 | 20.0 | 0 | 22.54 | 0.542 | 100.0 | 0.0 |
| **20 minutes CIL bottle roll tail** | 0.200 | 42.9 | 0 | 1.3 | 0.001 | 100.0 | 94.2 |
| **Head 40minutes** | 0.240 | 31.4 | 0.00 | 16.95 | 0.542 | 100.0 | 23.9 |
| **40 minutes** | 0.2 | 42.9 | 0 | 1.25 | 0.001 | 100.0 | 94.4 |
| **CIL bottle roll tail** | | | | | | | |
| **Run 3** | | | | | | | |
| **Head Time 0** | 0.35 | | 13.32 | 30.33 | 0.02 | | |
| **Head 5minutes** | 0.2 | 42.9 | 2.91 | 30.44 | 0.02 | 78.2 | 0.0 |
| **5 minutes CIL bottle roll tail** | 0.21 | 40.0 | 1.36 | 1.77 | 0.001 | 89.8 | 94.2 |
| **Head 10 minutes** | 0.2 | 42.9 | 3.12 | 30.14 | 0.018 | 76.6 | 0.6 |
| **10 minutes CIL bottle roll tail** | 0.200 | 42.9 | 1.46 | 2.46 | 0.001 | 89.0 | 91.9 |
| **Head 20 minutes** | 0.180 | 48.6 | 2.39 | 28.51 | 0.018 | 82.1 | 6.0 |
| **20 minutes CIL bottle roll tail** | 0.180 | 48.6 | 0.94 | 1.41 | 0.001 | 92.9 | 95.4 |
| **Head 40minutes** | 0.170 | 51.4 | 2.6 | 25.71 | 0.02 | 80.5 | 15.2 |
| **40 minutes CIL bottle roll tail** | 0.17 | 51.4 | 1.04 | 1.47 | 0.001 | 92.2 | 95.2 |

Table 3, above, shows the results obtained for the cyanide destruction test runs on the residue sample. On average, the cyanide destruction test runs yielded a bottle roll tail of 0.20g/t, 0.15g/t lower than the "as received" grade of 0.35g/t.

**Residue Run 1** (Aachen™ run for 40 minutes with 100ppm copper, iron and zinc addition at the start, and Ph corrected to 9 at the start)
pH adjustment to 9 showed a fair reduction in both the free and WAD cyanide levels before the bottle rolls. This is seen by comparing the time 0 result on run 3, where the pH was not adjusted, to the time zero result of run 1, where the ph was adjusted.

WAD values remained largely unchanged before the bottle rolls and upheld the trend of carbon catalysis by showing low WAD values after the bottle rolls.

**Residue Run 2** (Aachen™ run for 40 minutes with 100ppm copper and zinc addition at the start, and Ph corrected to 9 at the start)
Again pH adjustment to 9 showed a fair reduction in both the free and WAD cyanide levels before the bottle rolls. This is seen by comparing the time 0 result on run 3, where the pH was not adjusted, to the time zero result of run 2, where the pH was adjusted.

WAD values remained largely unchanged before the bottle rolls and upheld the trend of carbon catalysis by showing low WAD values after the bottle rolls.

**Residue Run 3** (Aachen™ run for 40 minutes with 50ppm copper, zinc and iron addition at the start, no pH adjustment)
The lower concentration of metals added gave a slightly higher free cyanide value on samples taken from the Aachen recirculation tank before the bottle rolls. WAD values again dropped significantly after the bottle rolls.

This Example shows:
Ph adjustment to 9 significantly reduces both the free and the WAD cyanide values.

Copper addition reduces the free cyanide only leaving the WAD values unchanged.

The addition of iron and zinc had no significant impact on the free and WAD cyanide values.

The most outstanding trend was that of the carbon catalysis of the oxidation of both the free and WAD cyanide, after Aachen™ treatment.

The gold recoveries that can be obtained from CIL tailing by the process.

### Example 10

### Test Procedure

30 litres of water was first transferred into the Aachen Reactor recirculation tank. The flow rate through the system was measured by recording the time to fill a 5litre beaker. This data was used to calculate the relationship between running time and the number of passes through an oxygenating device (in this case an Aachen™ Reactor available from Maelgwyn Mineral Services Ltd).

30 litres of thickener underflow sample was transferred into the Aachen™ Reactor recirculation tank.

Cyanide was added to the slurry to yield a free cyanide concentration of 300ppm.

The Aachen™ Reactor was then run for a period of 35 minutes, at a back-pressure of 3bar and an oxygen flow rate of 10litre/minute.

Samples were taken at time 0, 5, 10, 20, 30 and 35 minutes and subjected to standard 24h CIL bottle rolls with 10g/l carbon. The sample at time 35 was further spiked with cyanide to give an additional 300ppm of cyanide in the bottle roll. An aliquot of the samples taken was submitted for assay before the CIL bottle rolls in order to determine the extent of leaching within the Aachen™ Reactor.

pH, temperature and DO (dissolved oxygen) was recorded at regular intervals.

Table 18 presents the Au on solid assay results and recoveries for the thickener underflow sample Leach Aachen runs.

**Table 18: Au on Solid Assays, Au Recoveries.**

| | **Au g/t** | **Au Recovery %** |
|---|---|---|
| **Run 1** | | |
| **Head Time 0** | 2.72 | |
| **Time 0 CIL bottle roll tail** | 0.167 | 93.9 |
| **Head 5minutes** | 0.74 | 72.8 |
| **5 minutes CIL bottle roll tail** | 0.203 | 92.5 |
| **Head 10 minutes** | 0.873 | 67.9 |
| **10 minutes CIL bottle roll tail** | 0.177 | 93.5 |
| **Head 20minutes** | 0.730 | 73.2 |
| **20 minutes CIL bottle roll tail** | 0.17 | 93.8 |
| **Head 30minutes** | 0.71 | 73.9 |
| **30 minutes CIL bottle roll tail** | 0.2 | 92.6 |
| **Head 35minutes** | 0.71 | 73.9 |
| **35 minutes CIL bottle roll tail** | 0.18 | 93.4 |
| **Run 2** | | |
| **Head Time 0** | 2.71 | |
| **Time 0 CIL bottle roll tail** | 0.193 | 92.9 |
| **Head 5minutes** | 0.770 | 71.6 |
| **5 minutes CIL bottle roll tail** | 0.206 | 92.4 |
| **Head 10 minutes** | 0.69 | 74.5 |
| **10 minutes CIL bottle roll tail** | 0.193 | 92.9 |
| **Head 20minutes** | 0.89 | 67.2 |
| **20 minutes CIL bottle roll tail** | 0.157 | 94.2 |
| **Head 30minutes** | 0.863 | 68.2 |
| **30 minutes CIL bottle roll tail** | 0.2 | 92.6 |
| **Head 35minutes** | 0.863 | 68.2 |
| **35 minutes CIL bottle roll tail** | 0.2. | 92.6 |

Table 18 above shows extremely fast leaching, with roughly 70% of the leach taking place within the first five minutes of running.

This example shows benefits that can be attained in the accelerated leach step of the present invention.

## Claims

1. A method for removing cyanide from an aqueous stream, wherein:
the aqueous stream is contacted with 5-100 g/l activated carbon in particulate form with a particle size of 2-3 mm under conditions wherein the Eh (oxygen reduction potential (ORP) measured in mV) of the aqueous stream is from 0 - 300 mV, to remove cyanide from the stream and the pH of the aqueous stream is buffered to from 7 - 9;
or the aqueous stream is treated to control the Eh from 0 - 300 mV and thereafter the aqueous stream is contacted with 20-100 g/l activated carbon in particulate form with a particle size of 2-3 mm, to remove cyanide from the stream and the pH of the aqueous stream is buffered to from 7 - 9.

2. The method as claimed in claim 1, wherein the aqueous stream is a tail stream from a carbon in leach (CIL) mining operation.

3. The method as claimed in claim 1 or 2, wherein WAD cyanide is removed from the aqueous stream.

4. The method as claimed in any one of the preceding claims, wherein the Eh is from 0 - 200 mV.

5. The method as claimed in any one of the preceding claims, wherein the carbon is added in an amount of 20 - 60 g/l of the stream containing cyanide.

6. The method as claimed in claim 5, wherein the buffering takes place over a period of 0.5 - 1.5 hours, preferably about an hour.

7. The method as claimed in any one of the preceding claims, wherein the Eh,of the stream is controlled by passing the stream through an oxygenating device in multiple passes.

8. The method as claimed in claim 7, wherein the oxygenating device is operated at a pressure of from above 1 bar up to about 10 bar.

9. The method as claimed in claim 7, wherein the oxygenating device is operated at a pressure of about 2.5 bar.

10. The method as claimed in any one of claims 7 to 9, wherein oxygen is introduced into the oxygenating device in the form of bubbles.

11. The method as claimed in claim 10, wherein the bubbles have a size of from 1 micron to 1000 microns, preferably 1 to 500 microns, most preferably with an average size of 100 microns.

12. The method as claimed in any one of claims 7 to 11, wherein the oxygenating device provides high shearing to the stream.

13. The method as claimed in any one of claims 7 to 12, wherein the oxygen line pressure at the point of injection of oxygen is above the pressure of the oxygenating device.

14. The method as claimed in claim 15, wherein the oxygen line pressure at the point of injection of oxygen is above the pressure of about 10 bar.

15. The method as claimed in any one of claims 7 to 14, wherein the oxygen consumption of the oxygenating device is from 0.25 kg/t to 200 kg/t liquid.

16. The method as claimed in any one of claims 7 to 15, wherein the aqueous stream is re-circulated through the oxygenation device in 2 or more passes, preferably 2 to 300 passes, more preferably 2 to 200 passes, more preferably 2 to 50 passes.

17. The method as claimed in claim 18, wherein the aqueous stream is re-circulated through the oxygenation device in 2 to 10 passes.

18. The method as claimed in claim 19, wherein the aqueous stream is re-circulated through the oxygenation device in 2 to 5 passes.

19. The method as claimed in claim 20, wherein the aqueous stream is re-circulated through the oxygenation device in 2.5 passes.

20. The method as claimed in any one of claims 8 to 19, wherein the contact with carbon takes place in a tank separate from the oxygenation device.

21. The method as claimed in any one of claims 8 to 20, wherein the cyanide removal takes place in multiple stages.

## Patentansprüche

1. Verfahren zur Entfernung von Cyanid aus einem wässrigen Strom, wobei:
der wässrige Strom unter Bedingungen, bei denen der Eh-Wert (Sauerstoffredoxpotential (ORP), gemessen in mV) des wässrigen Stroms 0-300 mV beträgt, mit 5-100 g/l Aktivkohle in körniger Form mit einer Korngröße von 2-3 mm in Kontakt gebracht wird, um Cyanid aus dem Strom zu entfernen, und der pH-Wert des wässrigen Stroms auf 7-9 gepuffert wird;
oder der wässrige Strom behandelt wird, um den Eh-Wert auf 0-300 mV einzustellen, und der wässrige Strom danach mit 20-100 g/l Aktivkohle in körniger Form mit einer Korngröße von 2-3 mm in Kontakt gebracht wird, um Cyanid aus dem Strom zu entfernen, und der pH-Wert des wässrigen Stroms auf 7-9 gepuffert wird.

2. Verfahren nach Anspruch 1, wobei der wässrige Strom ein Abstrom eines Carbon-in-Leach (CIL) Bergbaubetriebs ist.

3. Verfahren nach Anspruch 1 oder 2, wobei aus dem wässrigen Strom schwach saures dissoziierbares Cyanid (WAD-Cyanid) entfernt wird.

4. Verfahren nach einem der vorangehenden Ansprüche, wobei der Eh-Wert 0-200 mV beträgt.

5. Verfahren nach einem der vorangehenden Ansprüche, wobei die Kohle in einer Menge von 20-60 g/l des cyanidhaltigen Stroms zugegeben wird.

6. Verfahren nach Anspruch 5, wobei die Pufferung über einen Zeitraum von 0,5-1,5 Stunden, vorzugsweise von ca. einer Stunde, erfolgt.

7. Verfahren nach einem der vorangehenden Ansprüche, wobei der Eh-Wert des Stroms eingestellt wird, indem der Stroms in mehreren Durchläufen durch eine Sauerstoffanreicherungsvorrichtung geleitet wird.

8. Verfahren nach Anspruch 7, wobei die Sauerstoffanreicherungsvorrichtung bei einem Druck von über 1 bar bis ca. 10 bar betrieben wird.

9. Verfahren nach Anspruch 7, wobei die Sauerstoffanreicherungsvorrichtung bei einem Druck von ca. 2,5 bar betrieben wird.

10. Verfahren nach einem der Ansprüche 7 bis 9, wobei Sauerstoff in Form von Bläschen in die Sauerstoffanreicherungsvorrichtung eingebracht wird.

11. Verfahren nach Anspruch 10, wobei die Bläschen eine Größe von 1 Mikrometer bis 1.000 Mikrometer, vorzugsweise 1 bis 500 Mikrometer, am meisten bevorzugt eine durchschnittliche Größe von 100 Mikrometer, aufweisen.

12. Verfahren nach einem der Ansprüche 7 bis 11, wobei die Sauerstoffanreicherungsvorrichtung eine große Scherung des Stroms bewirkt.

13. Verfahren nach einem der Ansprüche 7 bis 12, wobei der Sauerstoffleitungsdruck am Sauerstoffeinspritzpunkt über dem Druck der Sauerstoffanreicherungsvorrichtung liegt.

14. Verfahren nach Anspruch 15, wobei der Sauerstoffleitungsdruck am Sauerstoffeinspritzpunkt über dem Druck von ca. 10 bar liegt.

15. Verfahren nach einem der Ansprüche 7 bis 14, wobei der Sauerstoffverbrauch der Sauerstoffanreicherungsvorrichtung 0,25 kg/t bis 200 kg/t Flüssigkeit beträgt.

16. Verfahren nach einem der Ansprüche 7 bis 15, wobei der wässrige Strom in 2 oder mehr Durchläufen, vorzugsweise 2 bis 300 Durchläufen, besonders bevorzugt 2 bis 200 Durchläufen, noch bevorzugter 2 bis 50 Durchläufen, im Kreislauf durch die Sauerstoffanreicherungsvorrichtung geführt wird.

17. Verfahren nach Anspruch 18 **[sic],** wobei der wässrige Strom in 2 bis 10 Durchläufen im Kreislauf durch die Sauerstoffanreicherungsvorrichtung geführt wird.

18. Verfahren nach Anspruch 19 **[sic],** wobei der wässrige Strom in 2 bis 5 Durchläufen im Kreislauf durch die Sauerstoffanreicherungsvorrichtung geführt wird.

19. Verfahren nach Anspruch 20 **[sic],** wobei der wässrige Strom in 2,5 Durchläufen im Kreislauf durch die Sauerstoffanreicherungsvorrichtung geführt wird.

20. Verfahren nach einem der Ansprüche 8 bis 19, wobei der Kontakt mit der Kohle in einem von der Sauerstoffanreicherungsvorrichtung separaten Behälter erfolgt.

21. Verfahren nach einem der Ansprüche 8 bis 20, wobei die Cyanidentfernung in mehreren Stufen erfolgt.

## Revendications

1. Procédé pour éliminer le cyanure d'un flux aqueux, dans lequel :
le flux aqueux est en contact avec 5 à 100 g/l de charbon actif sous forme particulaire avec une taille de particules de 2 à 3 mm dans des conditions où le Eh (potentiel d'oxydo-réduction (POR) mesuré en mV) du flux aqueux est de 0 à 300 mV, afin d'éliminer le cyanure du flux et le pH du flux aqueux est tamponné pour aller de 7 à 9 ; ou le flux aqueux est traité pour réguler le Eh de 0 à 300 mV et par la suite, le flux aqueux est en contact avec 20 à 100 g/l de charbon actif sous forme particulaire avec une taille de particules de 2 à 3 mm, afin d'éliminer le cyanure du flux et le pH du flux aqueux est tamponné pour aller de 7 à 9.

2. Procédé selon la revendication 1, dans lequel le flux aqueux est un flux résiduel issu d'une opération minière de charbon en lixiviation (CIL).

3. Procédé selon la revendication 1 ou 2, dans lequel on élimine du flux aqueux le cyanure faiblement dissociable en milieu acide faible (WAD).

4. Procédé selon l'une quelconque des revendications précédentes, dans lequel le Eh est de 0 à 200 mV.

5. Procédé selon l'une quelconque des revendications précédentes, dans lequel le charbon est ajouté dans une quantité allant de 20 à 60 g/l de flux contenant du cyanure.

6. Procédé selon la revendication 5, dans lequel le tamponnage se déroule sur une période d'une demi-heure à 1 heure et demie, de préférence pendant 1 heure environ.

7. Procédé selon l'une quelconque des revendications précédentes, dans lequel le Eh du flux est régulé en faisant passer le flux à travers un dispositif d'oxygénation en plusieurs passages.

8. Procédé selon la revendication 7, dans lequel le dispositif d'oxygénation fonctionne à une pression débutant au-dessus de 1 bar jusqu'à environ 10 bar.

9. Procédé selon la revendication 7, dans lequel le dispositif d'oxygénation fonctionne à une pression d'environ 2,5 bar.

10. Procédé selon l'une quelconque des revendications 7 à 9, dans lequel l'oxygène est introduit sous forme de bulles dans le dispositif d'oxygénation.

11. Dispositif selon la revendication 10, dans lequel les bulles ont une taille allant de 1 µm à 1000 µm, de préférence de 1 à 500 µm et, de manière la plus préférée, une taille moyenne de 100 µm.

12. Procédé selon l'une quelconque des revendications 7 à 11, dans lequel le dispositif d'oxygénation fournit au flux un cisaillement important.

13. Procédé selon l'une quelconque des revendications 7 à 12, dans lequel la pression de la conduite d'oxygène au point d'injection de l'oxygène est supérieure à la pression du dispositif d'oxygénation.

14. Procédé selon la revendication 13, dans lequel la pression de la conduite d'oxygène au point d'injection de l'oxygène est supérieure à la pression d'environ 10 bar.

15. Procédé selon l'une quelconque des revendications 7 à 14, dans lequel la consommation d'oxygène du dispositif d'oxygénation est de 0,25 kg/t à 200 kg/t de liquide.

16. Procédé selon l'une quelconque des revendications 7 à 15, dans lequel le flux aqueux est recyclé dans le dispositif d'oxygénation en 2 passages ou plus, de préférence en 2 à 300 passages, de manière préférée en 2 à 200 passages, de manière plus préférée en 2 à 50 passages.

17. Procédé selon la revendication 16, dans lequel le flux aqueux est recyclé dans le dispositif d'oxygénation en 2 à 10 passages.

18. Procédé selon la revendication 17, dans lequel le flux aqueux est recyclé dans le dispositif d'oxygénation en 2 à 5 passages.

19. Procédé selon la revendication 18, dans lequel le flux aqueux est recyclé dans le dispositif d'oxygénation en 2 passages et demi.

20. Procédé selon l'une quelconque des revendications 8 à 19, dans lequel le contact avec le charbon se produit dans une cuve à l'écart du dispositif d'oxygénation.

21. Procédé selon l'une quelconque des revendications 8 à 20, dans lequel l'élimination du cyanure se déroule en plusieurs étapes.
